Europäisches Patentamt

European Patent Office

Office européen des brevets

(19)

(11) **EP 1 498 387 A1**

## (12) EUROPEAN PATENT APPLICATION
published in accordance with Art. 158(3) EPC

(43) Date of publication:
**19.01.2005 Bulletin 2005/03**

(21) Application number: **03746886.5**

(22) Date of filing: **28.03.2003**

(51) Int Cl.⁷: **C01B 3/02**, B01J 3/08,
C08J 11/10, C10J 3/00

(86) International application number:
**PCT/JP2003/003940**

(87) International publication number:
**WO 2003/089369 (30.10.2003 Gazette 2003/44)**

(84) Designated Contracting States:
**AT BE BG CH CY CZ DE DK EE ES FI FR GB GR
HU IE IT LI LU MC NL PT RO SE SI SK TR**

(30) Priority: **19.04.2002 JP 2002118427
24.05.2002 JP 2002150658
22.07.2002 JP 2002212330
26.12.2002 JP 2002376249**

(71) Applicant: **JFE Engineering Corporation
Tokyo 100-0005 (JP)**

(72) Inventors:
• **SUZUKI, Minoru, JFe Engineering Corp.
Yokohama-shi, Kanagawa 230-8611 (JP)**
• **IWASAKI, Katsuhi, JFe Engineering Corp.
Yokohama-shi, Kanagawa 230-8611 (JP)**
• **NAKAYAMA, Takashi, JFe Engineering Corp.
Yokohama-shi, Kanagawa 230-8611 (JP)**

(74) Representative: **HOFFMANN EITLE
Patent- und Rechtsanwälte
Arabellastrasse 4
81925 München (DE)**

(54) **HYDROGEN PRODUCTION METHOD, HYDROGEN PRODUCTION APPARATUS, HYDROGEN SUPPLY FACILITIES, AND METHOD FOR GENERATING ELECTRIC POWER**

(57)    A method and an apparatus for producing hydrogen and a hydrogen production plant are provided. In the method, hydrogen production requiring high temperature is performed at low cost using energy of relatively low-temperature exhaust heat discharged form various types of heat processes, and the apparatus can readily start and suspend operation and whose running cost and equipment cost are reduced. These are achieved by a method for producing hydrogen and a hydrogen production apparatus and plant for realizing the method. The method includes the step of heating a fluid to turn into a high-pressure gas having a pressure at least five times as high as the internal pressure of the hydrogen production apparatus before reaction by heat exchange with a heat source; the step of instantaneously releasing the high-pressure gas into the hydrogen production apparatus to generate a shock wave; the step of feeding a raw material into the hydrogen production apparatus before the generation of the shock wave; and the step of impact-compressing the raw material by the shock wave to heat the raw material, thereby producing hydrogen.

FIG. 1

## Description

## Technical Field

The present invention relates to a method for producing hydrogen and a hydrogen-containing fuel gas by subjecting a raw material, such as waste, to chemical reaction using a shock wave which is generated by instantaneously releasing a high-pressure gas prepared using relatively low-temperature waste heat energy discharged from various types of heat processes including waste incineration plants, and to an apparatus for producing hydrogen, a hydrogen supply plant, and a method for generating electric power by burning a hydrogen-containing gas.

## Background of the Invention

In order to produce hydrogen by reforming a wasted raw material with steam, an environment-conscious method (for example, Japanese Unexamined Patent Application Publication No. 2000-272904, pp. 3-4, FIG.1, hereinafter referred to as "prior art 1") may be applied to the hydrogen production process, which uses a heating furnace-type, double tube-type steam reforming reactor partitioned with a wall having a specific hydrogen separation membrane. In such a method, hydrocarbon as a raw material and steam are fed into one part of the double tube filled with a catalyst to perform a reforming reaction, and gas discharged from this part is cooled to be separated into a gas phase and a liquid phase. The resulting hydrogen is allowed to flow continuously into the other part 'of the double tube through the hydrogen separation membrane. At the same time, a part of the hydrogen is fed into the heating furnace together with oxygen to burn, so that heat is applied to the reforming reactor.

In another method, adopting a steam reformer process by using natural gas, (for example, Japanese Unexamined Patent Application Publication No. 62-197301, pp. 1-4, FIG. 1, hereinafter referred to as "prior art 2"), a mixture of steam and hydrocarbon as a raw material, such as natural gas and propane gas is brought into contact with a high-temperature reforming catalyst in a reactor to be reformed into gas that contains hydrogen and carbon monoxide, and the hydrogen is separated from the reformed gas.

In prior art 1, the reactant being a mixture of the raw material and steam must be heated to a high temperature of at least 450°C in order to perform a reforming reaction of high-temperature steam. Accordingly, prior art 1 requires a constantly available heat source of at least 620°C, generally about 800°C, and a fuel for the heat source. This produces not only the problem of consuming fuel inevitably, but also the problem of generating carbon dioxide due to the combustion of the fuel. In addition, since the reactor must maintain a constantly high-temperature field, it is required that at least the internal wall of the reactor is formed of expensive fire-resistant material, and consequently there occurs a problem that the investment cost becomes higher.

In prior art 2, the interior of the reactor must be in a high temperature state before reaction for producing hydrogen. Accordingly, there occurs a problem that a large amount of energy loss happens, when the equipment starts or suspends the operation. And there occurs a problem that the running cost of the equipment becomes higher. The time consuming also becomes bigger. Accordingly, once the interior of the reactor is brought into a high temperature state, hydrogen should be continuously produced for a long time. Thus, it is undesirably difficult to operate the system only when it is required to supply the hydrogen. And it is undesirably difficult to produce the hydrogen in accordance with a required small scale production or in accordance with a required short time production. In addition, since the temperature in the reactor is maintained high over a long period from the startup time to the suspension time, the apparatus is required to be constituted of a large amount of refractories, and consequently the investment cost becomes undesirably higher. Also, since natural gas or propane gas is used as a raw material, the running cost that is spent on the apparatus increases. Furthermore, carbon dioxide is emitted to an extent of an amount as much as equal or more than an amount of the produced hydrogen. Therefore, from the standing point of preventing global warming, the above-mentioned emission, which has been a worldwide problem in the recent years, is unfavorable.

## Summary of Invention

The present invention has been accomplished in order to overcome those disadvantages above. The object of the invention is to provide a method and an apparatus for producing hydrogen and a hydrogen supply plant. The method, apparatus, and plant perform hydrogen production, which requires high temperature, at a low cost using relatively low-temperature waste heat energy discharged from various types of heat processes, and the hydrogen production apparatus is so easy to start and suspend the operation as to reduce running cost and facility cost. Specifically, the present invention provides the following:

1. A method for producing hydrogen comprising:

the step of heating a fluid to turn into a high-pressure gas having a temperature in the range of 200°C or higher to 400°C or lower by heat exchange with a heat source;
the step of feeding a raw material into a reactor;
the step of instantaneously releasing the high-pressure gas into the reactor to generate a shock wave; and
the step of impact-compressing the raw material by the shock wave to heat the raw material, thereby producing hydrogen.

2. A method for producing hydrogen comprising:

the step of heating a fluid to turn into a high-pressure gas having a pressure at least five times as high as the internal pressure of a reactor before reaction by heat exchange with a heat source;
the step of feeding a raw material into the reactor;
the step of instantaneously releasing the high-pressure gas into the reactor to generate a shock wave; and
the step of impact-compressing the raw material by the shock wave to heat the raw material, thereby producing hydrogen.

3. A method for producing hydrogen comprising:

the step of heating a fluid having a low boiling point to turn into a high-pressure gas by heat exchange with a heat source;
the step of feeding a raw material into a reactor;
the step of instantaneously releasing the high-pressure gas into the reactor to generate a shock wave; and
the step of impact-compressing the raw material by the shock wave to heat the raw material, thereby producing hydrogen.

4. The method for producing hydrogen according to any one of above 1, 2, and 3 further comprising the step of separating the hydrogen from other products.

5. In the method for producing hydrogen according to any one of above 1, 2, and 3, the heat source is at least one of heat generating sources installed in thermal power plants, waste incineration plants, waste disposal plants, pig iron making facilities of ironworks, steel making facilities of ironworks, scrap melting facilities, nonferrous metal refining facilities, cement firing facilities, combustion facilities, and facilities using geothermal heat.

6. In the method for producing hydrogen according to any one of above 1, 2, and 3, the heat source is a combustion facility which generates steam from heat generated therefrom and which uses the steam for electric power generation.

7. In the method for producing hydrogen according to any one of above 1, 2, and 3, the heat source is a combustion facility which generates steam from heat generated therefrom and which uses the steam for electric power generation, and the high-pressure gas is surplus steam.

8. An apparatus for producing hydrogen comprising:

a heat source;
a heat exchanger for heating a fluid to turn into a high-pressure gas having a temperature in the range of 200°C or higher to 400°C or lower by heat exchange with the heat source;
a raw material feeder for feeding a raw material into a reactor; and
the reactor for producing hydrogen by instantaneously releasing the high-pressure gas to generate a shock wave and impact-compressing the raw material by the shock wave to heat the raw material.

9. An apparatus for producing hydrogen comprising:

a heat source;
a heat exchanger for heating a fluid to turn into a high-pressure gas having a pressure at least five times as high as the internal pressure of a reactor before reaction by heat exchange with the heat source;
a raw material feeder for feeding a raw material into the reactor; and
the reactor for producing hydrogen by instantaneously releasing the high-pressure gas to generate a shock wave and impact-compressing the raw material by the shock wave to heat the raw material.

10. An apparatus for producing hydrogen comprising:

a heat source;
a heater for heating a fluid having a low boiling point to turn into a high-pressure gas,
a feeder for feeding a raw material into a reactor, and
the reactor for producing hydrogen by instantaneously releasing the high-pressure gas to generate a shock wave and impact-compressing the raw material by the shock wave to heat the raw material.

11. In the apparatus for producing hydrogen according to any one of above 8, 9, and 10, the heat source is at least one of heat generating sources installed in thermal power plants, waste incineration plants, waste disposal plants, pig iron making facilities of ironworks, steel making facilities of ironworks, scrap melting facilities, nonferrous metal refining facilities, cement firing facilities, combustion facilities, and facilities using geothermal heat.

12. The apparatus for producing hydrogen according to any one of above 8, 9, and 10 further comprises a separator for separating the hydrogen from other products.

13. In the apparatus for producing hydrogen according to any one of above 8, 9, and 10, the heat source is a combustion facility which generates steam from heat generated therefrom and which uses the steam for electric power generation.

14. In the apparatus for producing hydrogen according to any one of above 8, 9, and 10, the heat source is a combustion facility which generates steam from heat generated therefrom and which uses the steam for electric power generation, and the high-pressure gas is surplus steam.

15. A hydrogen supply plant comprising:

a heat source;
a steam generator for generating steam having a temperature in the range of 200°C or higher to 400°C or lower by heat exchange with the heat source;
a raw material feeder for feeding a raw material into a reactor;
the reactor for producing hydrogen by instantaneously releasing the steam to generate a shock wave and impact-compressing the raw material by the shock wave to heat the raw material;
a separator for separating the hydrogen from a product containing the hydrogen produced in the reactor; and
an apparatus for supplying the separated hydrogen.

16. A hydrogen supply plant comprising:

a heat source;
a steam generator for generating steam having a pressure at least five times as high as the internal pressure of a reactor before reaction by heat exchange with the heat source;
a raw material feeder for feeding a raw material into the reactor;
the reactor for producing hydrogen by instantaneously releasing the steam to generate a shock wave and impact-compressing the raw material by the shock wave to heat the raw material;
a separator for separating the hydrogen from a product containing the hydrogen produced in the reactor; and
an apparatus for supplying the separated hydrogen.

17. In the hydrogen supply plant according to above 15 or 16, the heat source is a combustion facility which generates steam from heat generated therefrom and which uses the steam for electric power generation, and at least part of the steam is used for hydrogen production when hydrogen supply is required.

18. A method for generating electric power, comprising the steps of:

heating a fluid to turn into a high-pressure gas having a temperature in the range of 200°C or higher to 400°C or lower by heat exchange with a heat source;
feeding a raw material into a reactor;
instantaneously releasing the high-pressure gas into the reactor to generate a shock wave;
impact-compressing the raw material by the shock wave to heat the raw material, thereby producing gas that contains hydrogen; and
burning the gas that contains hydrogen in a gas turbine to generate electric power.

19. A method for generating electric power, comprising the steps of:

heating a fluid to turn into a high-pressure gas having a pressure at least five times as high as the internal pressure of a reactor before reaction by heat exchange with a heat source;
feeding a raw material into the reactor;'
instantaneously releasing the high-pressure gas into the reactor to generate a shock wave;
impact-compressing the raw material by the shock wave to heat the raw material, thereby producing gas that contains hydrogen; and
burning the gas that contains hydrogen in a gas turbine to generate electric power.

20. The method for generating electric power according to above 18 or 19 further comprises the steps of:

storing the gas that contains hydrogen; and
controlling the amount of electric power generation according to demand for electric power.

21. A method for producing hydrogen comprising the steps of:

feeding reactive particles containing a hydrocarbon or carbon into a compression chamber of a reactor;
feeding steam into the compression chamber of the reactor;
reacting the reactive particles with the steam each other, by heating a mixture of the reactive particles and the steam fed into the compression chamber to a high temperature, to produce gas that contains hydrogen, wherein the reaction step comprises the sub step of impact-compressing the mixture by a shock wave generated by jetting a high-pressure gas and by heating the mixture in the compression chamber to a high temperature, to react the reactive particles with the steam each other; and separating the hydrogen from the gas that contains the hydrogen.

22. The method according to above 21 further comprises the step of feeding the steam as a high-pressure gas into the compression chamber.

23. In the method according to above 21 or 22, the reactive particles comprise one selected from the group consisting of waste plastic powder, sprayed particles of melted plastic, powdered coal, and coke breeze.

24. An apparatus for producing hydrogen in which a mixture of reactive particles containing a hydrocarbon or carbon and steam is heated to a high temperature to react, thereby producing gas that contains hydrogen and in which the hydrogen is separated from the gas that contains the hydrogen, the apparatus comprising:

> a compression chamber for accommodating the mixture of the reactive particles and the steam and compressing the mixture;
> reactive particle feeding means for feeding the reactive particles into the compression chamber;
> steam feeding means for feeding the steam into the compression chamber; and
> shock wave generating means for generating a shock wave for impact-compressing the mixture of the reactive particles fed into the compression chamber and the steam, wherein the shock wave generating means includes:

>> a gas accommodation chamber for accommodating a high-pressure gas and communicating the high-pressure gas to the compression chamber; and
>> switching means for establishing and blocking a communication between the gas accommodation chamber and the compression chamber,

> wherein the high-pressure gas in the gas accommodation chamber is instantaneously jetted by the switching means to generate the shock wave, and the shock wave is propagated into the compression chamber and impact-compresses the mixture in the compression chamber to heat the mixture to a high temperature, thereby allowing the reactive particles and the steam to react to produce the gas that contains hydrogen.

25. The apparatus for producing hydrogen according to above 24 further comprises:

> compression chambers extending along the axis of a rotatable revolution body, located in a plurality of positions in the peripheral direction of the revolution body, the compression chambers each having an opening at at least one end thereof in the axis direction; and
> switching means having a gas jetting port at a position in the radius direction of the compression chambers, the gas jetting port being allowed to communicate with the gas accommodation chamber by rotating the revolution body in which the gas jetting port is opposed to the openings of the compression chambers and an end surface of the revolution body alternately,

> wherein the gas jetting port is closed by being opposed to the end surface of the revolution body, and is opened to establish a communication with the compression chamber by being opposed to one of the openings of the compression chambers, and
> wherein the shock wave of the high-pressure gas is intermittently propagated into the plurality of compression chambers by repetition of a sequence of blocking and establishing the communication.

26. The apparatus for producing hydrogen according to above 24 or 25 further comprises steam feeding means through which the shock wave generating means accommodates the steam generated by a waste heat boiler as the high-pressure gas in the gas accommodation chamber.

27. The apparatus for producing hydrogen according to any one of above 24, 25, and 26 further comprises a Laval nozzle, a gas tank, a filter apparatus, and a hydrogen separator.

**Brief Description of the Drawings**

FIG.1 is a structural block diagram of a hydrogen production apparatus according to Embodiment 1 of the present invention.
FIG.2 is a sectional view of the hydrogen production apparatus shown in FIG.1.
FIG.3 is a timing chart of the hydrogen production apparatus according to Embodiment 1 of the present invention.
FIG.4 is a structural block diagram of a hydrogen production apparatus according to Embodiment 2 of the present invention.

FIG.5 is a structural block diagram of a hydrogen production facility according to Embodiment 4 of the present invention.

FIG.6 is a structural block diagram of an electric power generation facility burning gas that contains hydrogen according to Embodiment 5 of the present invention.

FIG.7 is a schematic diagram of the structure of a hydrogen production apparatus according to Embodiment 6 of the present invention.

FIG.8A is a schematic illustration showing the structure of a compression chamber provided in the hydrogen production apparatus shown in FIG.7.

FIG.8B is a cross-sectional view taken along line I-I in FIG.8A.

FIG.9 is a sectional view of a shock wave generator for producing hydrogen according to an embodiment of the present invention.

FIG.10 is a structural diagram of a combination of the shock wave generator shown in FIG.9 and a hydrogen production apparatus connected to each other.

FIG.11 is a diagram showing the operation sequence of the apparatus shown in FIG.10.

FIG.12A shows one of the motions of the shock wave generator in order of the operation sequence shown in FIG. 11.

FIG.12B shows another one of the motions of the shock wave generator in order of the operation sequence shown in FIG.11.

FIG.12C shows another one of the motions of the shock wave generator in order of the operation sequence shown in FIG.11.

FIG.12D shows another one of the motions of the shock wave generator in order of the operation sequence shown in FIG.11.

**Preferred Embodiments for Carrying out the Invention**

Embodiment 1

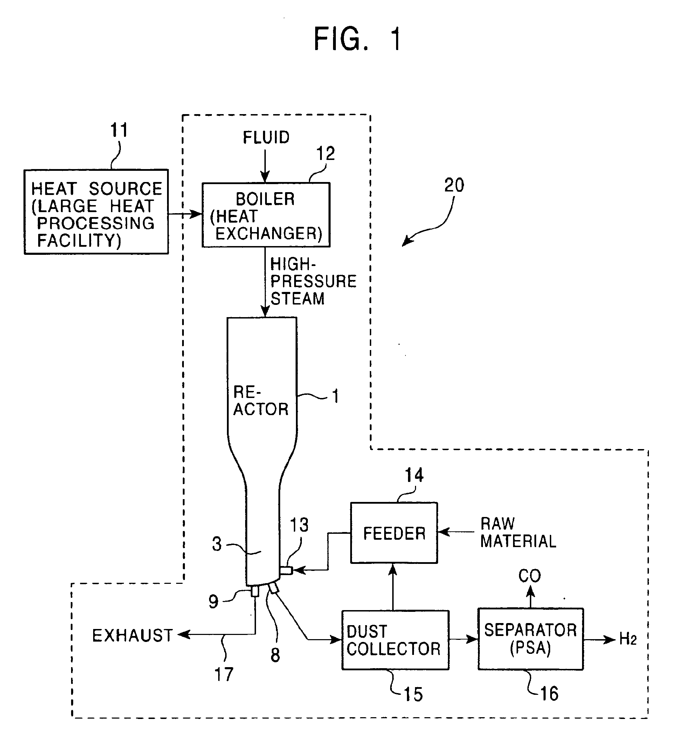

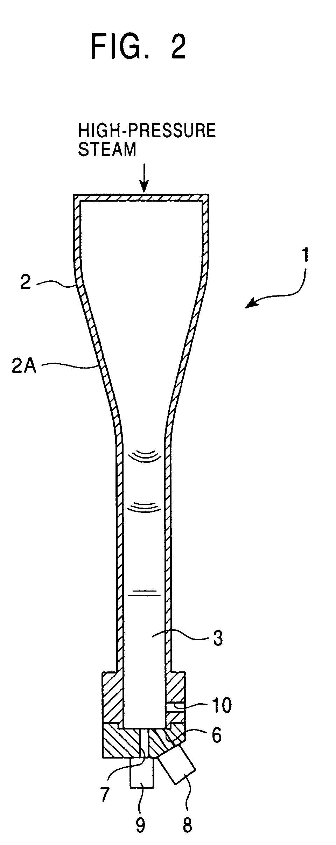

FIG.1 is a structural block diagram of an apparatus for producing hydrogen according to Embodiment 1 of the present invention; and FIG.2 is a sectional view of a reactor of the hydrogen production apparatus. In the figures, reference numeral 1 designates a reactor of a hydrogen production apparatus 20 conducting a reaction in which reactive particles containing hydrocarbon or carbon react with steam at a high temperature to produce hydrogen. The reactor includes a converging tube 2 having a converging portion 2A with a larger diameter at the upper end and a smaller diameter at the lower end and the cross section of the converging tube 2 thus decreases gradually from the upper end to the lower end. A space at the downstream side of the converging tube 2 defines a compression chamber 3 serving as a reaction chamber. High-pressure steam is instantaneously released to the converging tube 2 to generate shock waves, and the shock waves are converged in the converging portion 2A to produce a high-temperature, high-pressure converged shock wave. Then, in the compression chamber 3, a mixture of reactive particles and steam, described later, is impact-compressed by the converged shock wave to heat to a high temperature. Thus, the reactive particles and the steam in the mixture are allowed to react to produce gas that contains hydrogen.

Furthermore, the compression chamber 3 of the reactor 1 has a produced gas outlet 6 and an exhaust vent 7 at its bottom, and the produced gas outlet 6 and the exhaust vent 7 respectively have at their ends control valves 8 and 9 which open at predetermined time. In addition, a reactive particle feeding port 10 for feeding the reactive particles into the converging tube 2 is provided at a position slightly higher than that of the produced gas outlet 6 and the exhaust vent 7, and the reactive particle feeding port 10 has at its end a control valve 13 which opens at predetermined time.

Reference numeral 11 designates a heat source comprising a large heat processing facility, such as a waste incinerator, and reference numeral 12 designates a boiler serving as a heat exchanger which recovers the waste heat of exhaust gas from the heat source 11 and which heats a fluid (for example, water) by exchanging heat to generate high-pressure steam being high-pressure gas. The boiler 12 is connected to the upstream side of the reactor 1 and feeds the high-pressure steam into the converging tube 2 of the reactor 1.

The heat source 11 is a heat generating source installed in thermal power plants, waste incineration plants, waste disposal plants, pig iron making facilities of ironworks, steel making facilities of ironworks, scrap melting facilities, nonferrous metal refining facilities, cement firing facilities, combustion facilities, and facilities using geothermal heat. The boiler 12 serving as a heat exchanger heats water (fluid) to generate high-pressure steam by use of exhaust gas from combustion apparatuses, incinerators, blast furnaces, steel converters, lime firing, coke ovens, sintering apparatuses, cupolas, and so forth of those heat generating sources.

Reference numeral 14 designates a feeder for separating a raw material containing hydrocarbon or carbon from the other materials and crushing the raw material to pulverize it into reactive fine particles, and for feeding the reactive particles to the reactor 1. The feeder 14 is connected to the upstream side of the reactive particle feeding port 10 of the reactor 1 and feeds the pulverized reactive particles through the control valve 13 at predetermined time.

Reference numeral 15 designates a dust collector for removing impurities, such as unreacted reactive particles, halides and sulfur compounds, from the hydrogen-containing gas generated in the reactor 1. The dust collector is connected to the downstream side of the produced gas outlet 6 of the reactor 1 and also connected to the feeder 14 so as to feed back the unreacted reactive particles for recycling. Reference numeral 16 is a separator for separating the hydrogen-containing gas from the dust collector 15 into hydrogen gas and CO gas so as to allow these gases to be taken out separately, and is connected to the downstream side of the dust collector 15. The separator 16 is, for example, a pressure swing adsorption apparatus (PSA). Such separation of hydrogen is not limited to by pressure swing adsorption, and may be performed by other methods including membrane separation, low-temperature separation, and a technique of directly occluding hydrogen to a hydrogen-occluding material. Reference numeral 17 designates an exhaust pipe connected to the exhaust vent 7 via the control valve 9 and through which the steam remaining in the compression chamber 3 is discharged after the completion of the reaction in the reactor 1.

Preferably, the high-pressure steam has a temperature in the range of 200°C or higher to 400°C or lower. A high-pressure steam temperature of less than 200°C leads to a low reaction efficiency because it makes unstable the shock wave generated by instantaneously releasing the high-pressure steam, and does not allow a high-temperature, high-pressure field generated by the shock wave to reach a high temperature. Also, it is difficult to produce a high-pressure steam having a temperature of more than 400°C from relatively low-temperature waste heat of exhaust gas from the heat source 11, such as a waste incinerator. Accordingly, for such high-temperature, high-pressure steam, a dedicated heat source is required and the exhaust gas is not recycled effectively. A temperature of 300°C or more further increases the reaction efficiency. Therefore, it is preferable that the high-pressure steam has a temperature in the range from 300°C or higher to 400°C or lower. Preferably, the heat source 11 is a heat process providing warm heat having a temperature in the range of 50°C or higher to 600°C or lower. A warm heat of less than 50°C makes the pressure of the high-pressure steam low or insufficient. A warm heat of more than 600°C makes the temperature of the high-pressure steam to more than 400°C, and accordingly, the facility for producing such heat becomes large and the process becomes complicated. Thus, the heat source 11 provides warm heat having a temperature in the range from 50°C or higher to 600°C or lower so as to produce high-pressure stream having a temperature in the range from 200°C or higher to 400°C or lower.

Preferably, the high-pressure steam fed into the reactor 1 has a pressure at least five times as high as the internal pressure of the reactor 1 before the reaction. The shock wave is generated by instantaneously releasing the high-pressure steam into the reaction chamber (the inside of the converging tube 2) of the reactor 1. In this instance, a pressure ratio of at least 5 of the high-pressure steam to the inside of the reactor 1 before the reaction can provide a shock wave sufficient for compressing the reactive particles and steam to heat them on its impact and thus for bringing them into a reaction. More preferably, the high-pressure steam has a pressure ratio of at least 10. Such pressure ratio enhances the stability of the shock wave and allows the high-temperature field (shock temperature) generated by the shock wave to reach a higher temperature, thus efficiently progressing the reaction between the reactive particles and the steam. Furthermore, by using a high-pressure steam having a pressure ratio in the range from 20 or higher to 40 or lower, the shock high temperature can be further increased to enhance the reaction efficiency.

The shock wave generated by instantaneously releasing the high-pressure steam having a pressure ratio of at least 5 to the internal pressure of the reactor 1 before the reaction may be propagated along the converging portion 2A, whose passage cross section area gradually decreases in the direction of shock wave movement, so that a plurality of shock waves interfere with each other to generate a converged shock wave. Thus, the shock high temperature can increase to a still higher level. As the ratio (constriction ratio) of the passage cross section area at the downstream side of the converging portion 2A to that at the upstream side decreases, the convergence density of the shock wave increases, and consequently the shock temperature reaches a high level.

Operating the reactor 1 with the inside at atmospheric pressure before the reaction easily helps sealing for preventing ambient gas and the like from interfusing into the reactor 1 (converging tube 2). If the internal pressure of the reactor 1 is set at atmospheric pressure, the pressure of the high-pressure steam is set in the range from 10 atmospheres or higher to 40 atmospheres or lower in order to set the pressure ratio of the high-pressure steam to the inside of the reactor 1 before the reaction in the range of 10 or higher to 40 or lower, and the temperature of the high-pressure steam is set in the range from 200°C or higher to 400°C or lower. High-pressure steam in this temperature range corresponds to steam generated by waste heat recovery boilers, such as waste heat boilers of waste incinerators; hence, energy can be used effectively. The internal pressure of the reactor 1 may be reduced before the reaction. Thus, the pressure ratio can be set high even if the pressure of the high-pressure steam is not sufficiently high. For reducing the internal pressure of the reactor 1, a blower for reducing pressure or a vacuum pump is used.

Using the hydrogen production apparatus 20 having the above-described structure according to Embodiment 1, hydrogen is produced in the following process.

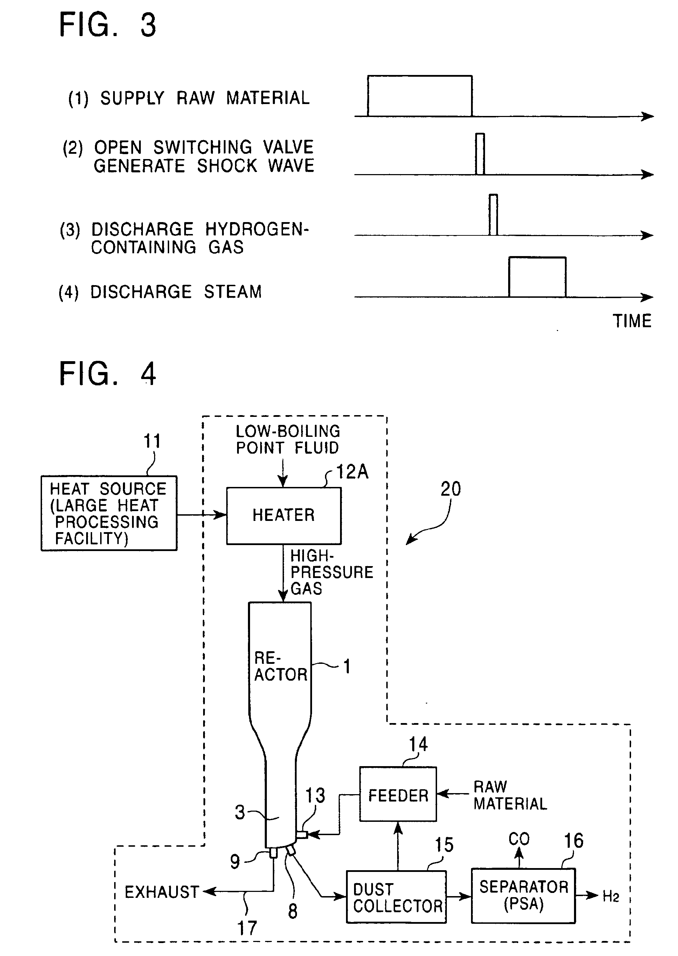

(1) First, the control valve 13 is opened and the reactive particles are fed into the compression chamber 3 of the reactor 1 from the reactive particle feeding port 10 through the feeder 14. On closing the control valve 13, the feeding of the reactive particles is stopped. At this moment, the gas outlet 6 and the valves 8 and 9 of the exhaust vent 7 are closed (see timing chart (1) shown in FIG. 3).

(2) Then, high-pressure steam is instantaneously jetted into the converging tube 2 for an extremely short time of, for example, one to several milliseconds from the boiler 12, and the instantaneously released high-pressure steam generates shock waves. The shock waves travel toward the lower end of the converging tube 2. The shock waves are merged and converged into the converging portion 2A of the converging tube 2 to turn into a converged shock wave (see timing chart (2) shown in FIG. 3). The converged shock wave travels to the compression chamber 3,'and rapidly compresses steam together with the reactive particles fed into the compression chamber 3 to increase temperature. On reaching a temperature of, for example, 3000 K, the reactive particles instantaneously react with the high-pressure steam to produce gas that contains hydrogen gas and CO gas due to such ultrahigh temperature.

The reaction of the reactive particles containing hydrocarbon or carbon with the steam to produce hydrogen and CO proceeds as follows:

$$C_mH_{2n} + mH_2O \rightarrow mCO + (m+n) H_2$$

$$C + H_2O \rightarrow CO + H_2$$

(3) When the control valve 8 of the produced gas outlet 6 is opened, the hydrogen-containing gas in the reactor 1 (compression chamber 3) is transmitted to the dust collector 15, and unreacted reactive particles and impurities are removed by the dust collector 15 (see timing chart (3) shown in FIG. 3). At this moment, the unreacted reactive particles are transmitted to the feeder 14 for recycling. Then, the hydrogen-containing gas is separated into hydrogen gas and CO gas in the separator 16, and they are taken out separately.

(4) In the reactor 1, on transmitting the hydrogen-containing gas to the dust collector 15, the control valve 8 of the gas outlet 6 is closed and the control valve 9 of the exhaust vent 7 is opened, so that the remaining gas in the compression chamber 3, including steam is discharged to the outside through the exhaust pipe 17. Thus, the reactor 1 is ready for subsequent hydrogen production (see timing chart (4) shown in FIG. 3).

As described above, the reaction for producing hydrogen is conducted through the process in which high-pressure steam having a temperature in the range of 200°C or higher to 400°C or lower is generated using waste heat of exhaust gas from a heat source 11 being a large heat process facility, such as a waste incinerator; the high-pressure steam is instantaneously jetted into the reactor 1 to generate shock waves; the shock waves are converged to turn into a converged shock wave; and the converged shock wave heats steam and reactive particles to a high temperature so as to react with each other. Thus, low-temperature energy, which is conventionally disposed of, is used effectively. Also, since the converged shock wave is easily produced and used for instantaneously providing a high-temperature field, the operation of the apparatus can be easily started and suspended. Thus, the method and apparatus for producing hydrogen induce hydrogen production only when hydrogen supply is required.

The reactor 1 produces hydrogen basically by repetition of a batch process, and accordingly the operation of the apparatus can be rapidly started and suspended. Also, the separator 16 repeats a batch operation for separating hydrogen, basically, and accordingly it can be instantaneously operated according to the variation of the heat source by, for example, varying the cycle time. Thus, hydrogen is supplied readily and immediately when required, without installing an expensive hydrogen storage facility or the like. Thus, the method and apparatus of the present invention provide hydrogen at a low cost.

In Embodiment 1, the raw material and the compression chamber may be preheated in advance. In this instance, they are preheated to the degree of 200°C or more, but it is unnecessary to heat to the degree of 600°C or more as in the steam reformer process described in prior art 2. By preheating, reaction efficiency in the compression chamber 3 is increased and the amount of steam used is reduced.

Impurities contained in the reactive particles, such as halides, sulfur compound, foreign matter, and other substances and compounds not involved in or inhibiting the reaction, may be removed before feeding the reactive particles, which are fed into the reactor 1 by the feeder 14 in Embodiment 1. Thus, the dust collector 15 can easily remove impurities, and the reactor 1 can produce hydrogen containing few impurities.

Part of the CO gas produced together with hydrogen in the reactor 1 may be supplied to the reactor 1 after being separated from the hydrogen, thus reacting with steam to form a raw material for producing hydrogen. Thus, the reactive particles to be fed, such as powdered coal, can be saved.

Embodiment 2

FIG.4 is a structural block diagram of a hydrogen production apparatus according to Embodiment 2 of the present invention. In Embodiment 2, the boiler 12 being a heat exchanger of the hydrogen production apparatus 20 of Embodiment 1, which recovers the waste heat of exhaust gas from the heat source 11 and which heats a fluid (for example, water) to generate high-pressure steam by heat exchange, is replaced with a heater 12A which recovers the waste heat of exhaust gas from the heat source 11 and which heats a low-boiling-point fluid to generate high-pressure gas by heat exchange.

The low-boiling-point fluid has a boiling point lower than that of water, and may be LNG, LPG, liquefied carbon dioxide, ammonia, DME (dimethyl ether), an alcohol, or an ether. The low-boiling-point fluid itself may serve as a raw material of the reaction (hydrogen production) in some cases.

This structure provides substantially the same effects and advantages as Embodiment 1, and allows the low-boiling-point fluid to turn into high-pressure gas at a low temperature or a low energy. Thus, low-temperature energy, which is conventionally disposed of or whose effective use has not been found, can be used effectively. In addition, Embodiment 2 provides a method for producing hydrogen at a low cost in which the apparatus can start and suspend operation according to request to supply hydrogen, and an apparatus for the method.

Embodiment 3

In Embodiment 3 of the present invention, the hydrogen production apparatus 20 of Embodiment 1 is installed in a predetermined site to constitute a hydrogen supply plant, and is used as, for example, a hydrogen supply source for fuel-cell vehicles.

In the hydrogen supply plant having such a structure, when a fuel-cell vehicle comes in for feeding hydrogen, the hydrogen production apparatus 20 immediately starts operating to produce hydrogen and supply it into the tank of the vehicle. On completing hydrogen supply, the operation of the hydrogen production apparatus 20 is suspended. When another vehicle comes in, the hydrogen production apparatus 20 starts operation to supply hydrogen again as above.

Since the hydrogen production apparatus 20 is installed in a predetermined site to constitute a hydrogen supply plant, hydrogen is supplied to fill the object easily and immediately according to a demand for hydrogen, without providing an expensive hydrogen storage facility or the like. Thus, the hydrogen supply plant supplies hydrogen at a low cost.

If the heat source of Embodiment 3 is a combustion facility for generating electric power by generating steam from generated heat and supplying the steam to a turbine, like an incinerator of a waste incineration plant, at least part of the steam is fed into the hydrogen production apparatus and thus hydrogen can be easily produced and supplied when hydrogen supply is required. Thus, the hydrogen supply plant can supply hydrogen at a low cost.

Although Embodiment 3 illustrates a hydrogen supply plant including the hydrogen production apparatus 20 according to Embodiment 1, the hydrogen supply plant may include hydrogen production apparatus 20 according to Embodiment 2. Such plant produces the same effects.

Embodiment 4

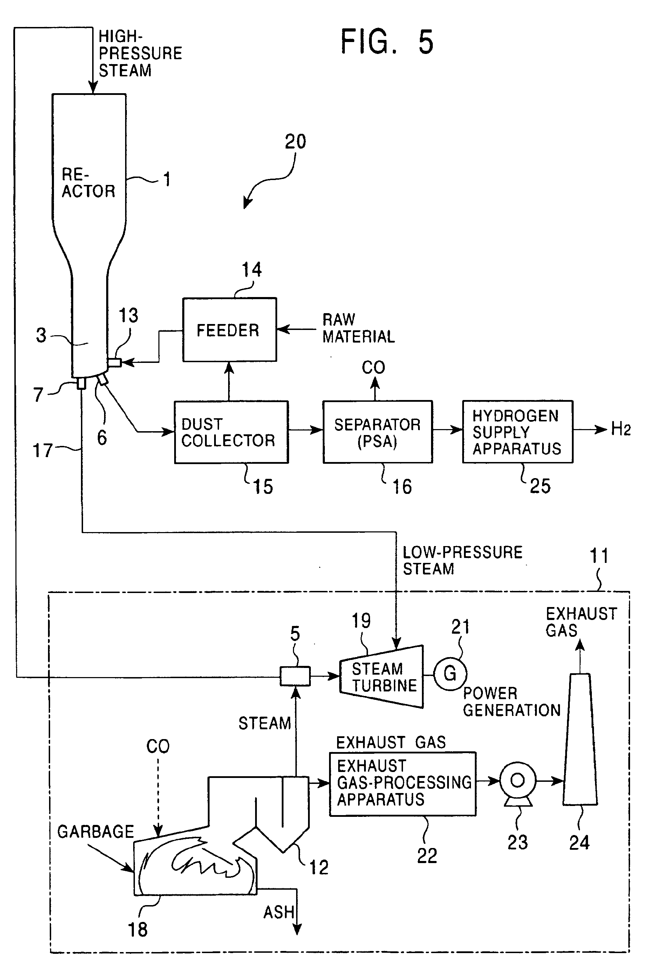

FIG. 5 is a structural block diagram of a hydrogen production apparatus according to Embodiment 4 of the present invention. In Embodiment 4, a large heat process facility serving as the heat source 11 of the hydrogen production apparatus 20 of Embodiment 1 is defined by a waste incineration plant including a boiler 12, and steam generated from the waste incineration plant is used for producing hydrogen.

The waste incineration plant generates high-pressure steam in the boiler 12 using waste heat from an incinerator 18 for burning wastes. The generated high-pressure steam is switched between the boiler 12 and the reactor 1 by a switching valve 5, and thus fed to the reactor 1 or a steam turbine 19 described later. On feeding the steam to the steam turbine 19, the steam turbine 19 is driven by the steam to drive a generator 21 connected to the steam turbine 19, and thus electric power is generated. On feeding the steam to the reactor 1, a shock wave is generated in the reactor 1, and the shock wave causes the reactive particles and steam in the reactor 1 to react to produce gas that contains hydrogen. The steam after being used for driving the steam turbine 19 is recycled for a heated effluent facility or the like effectively.

The boiler 12 is connected to an exhaust gas-processing apparatus 22 for processing exhaust gas coming through the boiler 12 from the incinerator 18 into a state releasable to the air. Exhaust gas from the incinerator 18 is drawn to the exhaust gas-processing apparatus 22 by an inducing fan 23 connected to the exhaust gas-processing apparatus 22. The exhaust gas is processed into a state releasable to the air in the exhaust gas-processing apparatus 22 and released to the air through a smokestack 24.

On the other hand, the separator 16, which is a pressure swing adsorption apparatus (PSA) for separating hydrogen gas and CO gas from hydrogen-containing gas from which unreacted reactive particles and the like have been removed by the dust collector 15, is connected to a hydrogen supply apparatus 25 for supplying the separated hydrogen on an as-needed basis to objects which require hydrogen, and also connected to the incinerator 18 so as to feed back the separated CO gas for effective recycling. In particular, in the case where the incinerator 18 is intended for wastes, supplying the CO gas to a combustion-starting region has an effect on stabilizing combustion. In addition, by supplying steam discharged from the exhaust vent 7 of the reactor 1 to the low-pressure side of the steam turbine 19, energy can be used effectively.

This structure produces substantially the same effects and advantages as Embodiment 1. In this structure, a waste incineration plant serves as the heat source 11, and at least part of the steam fed into the steam turbine 19 side and used for power generation is supplied to the reactor 1 with a switching valve 5 for switching steam supply between the reactor 1 and the steam turbine 19, provided between the boiler 12 of the waste incineration plant and the reactor 1 and is thus used for hydrogen production. Thus, the entirety of steam is used for power generation when hydrogen supply is not required. Also, when a constant amount of steam required for generating a steady amount of power is generated in the boiler, the entire amount of steam is used for power generation, and when the amount of waste increases to generate a larger amount of steam than the constant amount, the surplus steam may be used for hydrogen production.

Thus, the variable surplus of steam generated from the boiler 12 is used effectively. Also, since an amount of heat sufficient to cause reactive particles and high-pressure steam in the reactor 1 to react can be supplied in a short time, energy loss at the startup and suspension of the operation of the apparatus can decrease. Thus, the equipment cost and running cost of the hydrogen production apparatus 20 are reduced. Furthermore, the CO gas separated by the separator 16 can be used effectively as the fuel of the incinerator.

Although, in Embodiment 4, at least part of the steam generated from the waste incinerator plant is supplied to the reactor 1 to operate the hydrogen production apparatus 20 only when hydrogen supply is required, product storage means for steadily supplying hydrogen in response to the changes in amount of heat generated from the heat source 11 may be provided to the dust collector 15, the separator 16, the hydrogen production apparatus 25, and so forth. Thus, the amount of heat generated from the heat source 11 is controlled at any time between the storage means and the reactor 1 side or the steam turbine 19 side, so that the economical efficiency of the hydrogen production apparatus 20 increases.

Although Embodiment 4 uses a waste incinerator plant as the heat source of the hydrogen production apparatus 20 according to Embodiment 1, the waste incinerator plant may be used as the heat source of the hydrogen production apparatus 20 according to Embodiment 2. Such structure also produces the same effects.

Embodiment 5

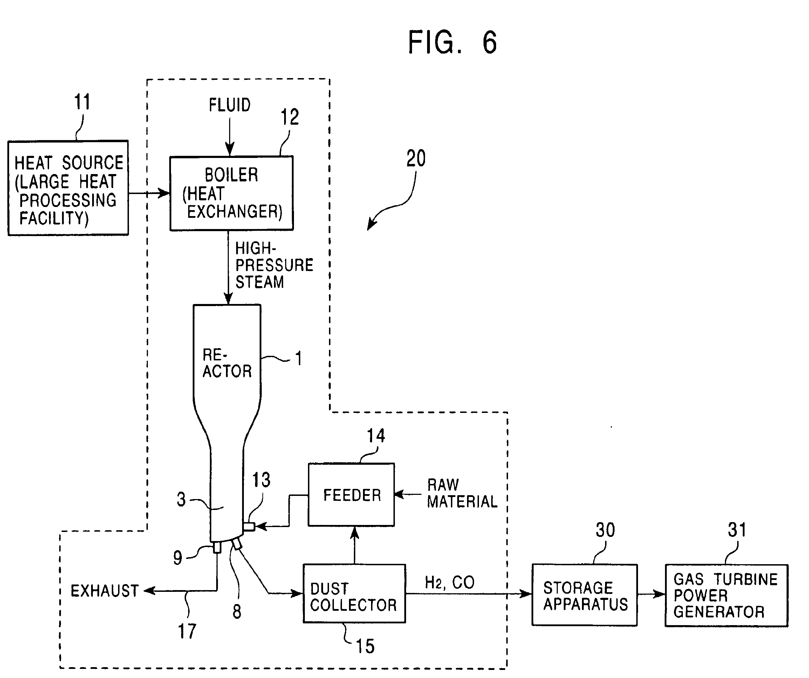

FIG. 6 is a structural block diagram of an electric power generation plant, which burns a hydrogen-containing gas, according to Embodiment 5 of the present invention. In Embodiment 5, a hydrogen-containing gas generated by the operation of the hydrogen production apparatus 20 according to Embodiment 1 is fed to a gas turbine power generator as a fuel to generate electric power.

High-pressure steam generated in the boiler 12 recovering waste heat from the large heat processing facility 11 is fed to the reactor 1 to generate a shock wave in the reactor 1. The shock wave causes reactive particles and steam in the reactor 1 to react to produce hydrogen-containing gas. The hydrogen-containing gas produced in the reactor 1 from which unreacted reactive particles and the like are removed by the dust collector 15 also contains CO, which is used as a high-calorie fuel. The hydrogen-containing gas is temporarily stored in a storage apparatus 30, and then supplied to the gas turbine power generator 31.

Power generation by burning the hydrogen-containing gas in a gas turbine significantly increases the efficiency of power generation in comparison with that of power generation by driving a steam turbine using waste heat recovered from conventional heat processes. Since the hydrogen-containing gas does not contain harmful substances unsuitable for combustion in the gas turbine, such as sulfur compounds and chlorides, pretreatment of the gas is not necessary, including removal of those harmful substances. Thus, facility cost and running cost can decrease.

By storing the hydrogen-containing gas in the storage apparatus 30, the amount of the hydrogen'gas supplied to the gas turbine can be adjusted so as to control the amount of power to be generated, according to the demand for electric power. Thus, the balance between the demand and supply of electric power can be equalized. In addition, power generation can be performed during time periods when the price of power is high so that profit in selling power increases.

As described above, the present embodiment realizes a reaction requiring high temperature at a low cost, using relatively low-temperature waste energy discharged from various types of heat processes. The apparatus performing the reaction easily generates a shock wave using the relatively low-temperature waste energy and instantaneously generates a high-temperature field. Therefore it becomes easy to start and suspend the operation of the apparatus, resulting in performing the reaction of the hydrogen production, for example, only when hydrogen supply is required to be supplied. Thus, the hydrogen can be produced and supplied at a low cost, simultaneously with reducing the running cost and the investment cost.

Embodiment 6

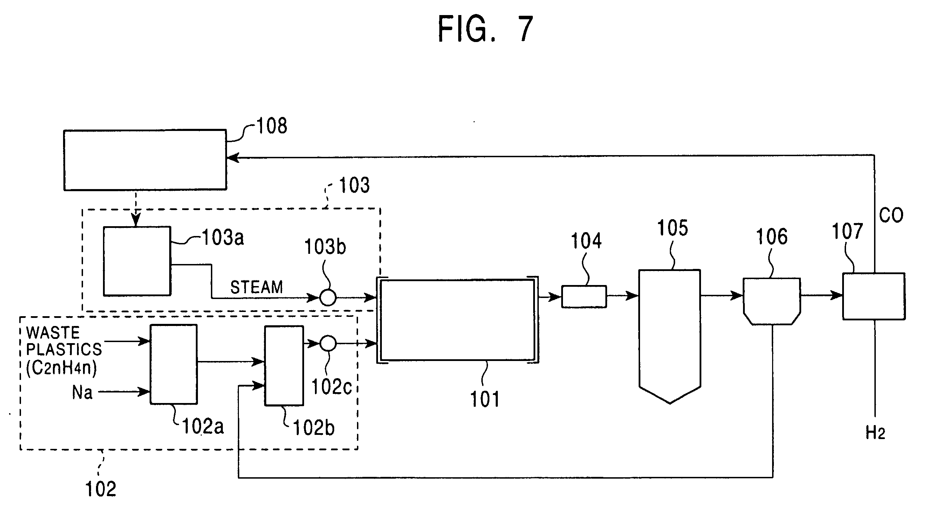

FIG. 7 is a schematic diagram of the structure of a hydrogen production apparatus according to Embodiment 6 of the present invention.

The hydrogen production apparatus of the present embodiment includes a reactor 101 for allowing to react a mixture of steam and fine powder prepared by pulverizing plastic material collected as waste (hereinafter referred to as waste plastics) or powdery waste plastics (hereinafter referred to as waste plastic powder), as shown in FIG. 7.

The reactor 101 is connected to a reactive particle feeder 102 for feeding the waste plastic powder into the reactor 101. The reactive particle feeder 102 includes a pulverizer 102a for pulverizing waste plastics and a feeder 102b for feeding the waste plastic powder prepared with the pulverizer 102a into the reactor 101 through a high-speed switching valve 102c. The waste plastics are transferred to the pulverizer 102a by an inert gas, such as $N_2$.

The reactor 101 is connected to a waste heat boiler 103a feeding steam to the reactor 101 through a high-speed valve 103b. The waste heat boiler 103a generates steam serving as high-pressure gas, using waste heat from a combustion apparatus or heat process apparatus 108, such as a sintering furnace, a heating furnace, or a waste incinerator. In the present embodiment, a shock wave is generated by opening switching means, described below, to instantaneously release steam from the waste heat boiler 103a. The waste heat boiler 103a and the switching means define a shock wave generator 103 and double as a steam feeder.

A shock wave generated by the shock wave generator 103 compresses the mixture in the reactor 101 to heat it, thereby producing hydrogen.

A switching member may be provided to the reactor 101, instead of the high-speed switching valves 102c and 103b.

A Laval nozzle 104 is also connected to the reactor 101 for jetting high-pressure hydrogen-containing gas produced by a reaction of the mixture of the waste plastic powder and steam, at a high speed.

The Laval nozzle 104 communicates with a gas tank 105 for temporarily accommodating the hydrogen-containing gas discharged from the Laval nozzle 104 to reduce the pressure.

The gas tank 105 communicates with a bag filter apparatus 106 for removing unreacted reactive particles from the hydrogen-containing gas whose pressure is reduced in the gas tank 105.

The bag filter apparatus 106 is connected to a pressure swing adsorption (PSA) apparatus 107 for separating hydrogen from the hydrogen-containing gas from which unreacted reactive particles have been removed by the bag filter 106. The bag filter 106 is also connected to the feeder 102b so as to feed back the removed unreacted reactive particles for recycling.

The pressure swing adsorption apparatus 107 is connected to the combustion apparatus or heat process apparatus 108 to feed back the carbon monoxide (CO) remaining after separation as a fuel for recycling.

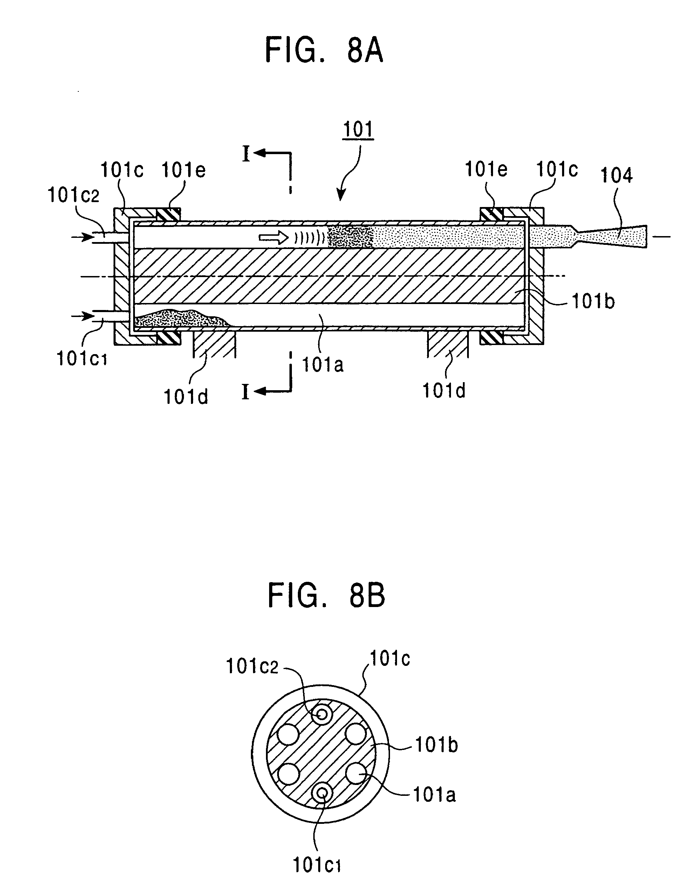

The reactor 101 will now be further described in detail with reference to FIG.8.

FIG. 8A is a schematic illustration of the reactor 101, and FIG. 8B is a sectional view taken along line I-I of FIG. 8A.

As shown in FIG.8A and FIG.8B, compression chambers 101a for accommodating the mixture of the waste plastic powder and steam and impact-compressing the mixture to heat it extend along the axis of a revolution body 101b, in a plurality of positions in the peripheral direction of the revolution body 101b, and whose ends in the axis direction are open.

Switching members 101C are provided so as to oppose the respective end surfaces in the axis direction of the revolution body 101b with such a predetermined clearance as to allow the revolution body 101b to revolve. The spaces between the switching members 101c and the curved surface of the revolution body 101b are sealed with sealing members 101e. The sealing may use a labyrinth seal.

One of the switching members 101c at the side from which the waste plastic powder and steam are fed (hereinafter referred to as the feeding side) is provided with two openings: one opening 101c1 communicates with the feeder 102b of the reactive particle feeder 102 for feeding the waste plastic powder into the compression chamber 101a; and the other opening 101c2 communicates with the waste heat boiler 103a of the shock wave generator 103 for feeding steam into the compression chamber 101a. The other switching member 101c at the side from which the hydrogen-containing gas is discharged (hereinafter referred to as the discharge side) is provided with the Laval nozzle 104.

The revolution body 101b is rotatably supported by a supporting member 101d, such as a bearing, and is driven to revolve by driving means (not shown in the figures). The revolution body 101b intermittently or continuously revolves so that the opening 101c2 alternately opposes the openings of the compression chambers 101a and the end surface of the revolution body 101b at a position where the radiuses of the opening 101c2 and the compression chamber 101a extend in substantially the same direction.

When the opening 101c2 opposes the end surface of the revolution body 101b, the opening 101c2 comes into contact with the end surface of the revolution body 101b to block the communication between the waste heat boiler 103a and the compression chambers 101a, and when the opening 101c2 opposes the opening of one of the compression chambers 101a, the opening 101c2 is joined with the opening of the compression chamber 101a to establish a communication between the compression chamber 101a and the waste heat boiler 103a. In the present embodiment, thus, such collaboration between the opening 101c2 and the end surface of the revolution body 101b defines switching means for establishing and blocking the communication between the compression chambers 101a and the waste heat boiler 103a.

On the other hand, when the opening 101c2 opposes the opening of the compression chamber 101a, the other opening 101c1 is also joined with the opening of one of the other compression chambers 101a opposite to the opening 101c2 in the radius direction to establish a communication between the compression chamber 101a and the feeder 102b. In the present embodiment, thus, such collaboration between the opening 101c1 and the end surface of the revolution body 101b defines switching means for establishing and blocking the communication between the compression chamber 101a and the feeder 102b.

The Laval nozzle 4 is joined with the opening of the compression chamber 101a at the discharge side to establish a communication between the compression chamber 101a and the gas tank 105 when the opening 101c2 opposes the end surface of the revolution body 101b.

Thus, as shown in FIG.8B, the waste plastic powder is intermittently or continuously fed into the plurality of compression chambers 101a from the feeder 102b from one after another when the opening 101c1 opposes the opening of the compression chamber 101a during revolution of the revolution body 101b, and steam is fed into the compression chamber 101a to which the waste plastic powder has been fed when the opening of the compression chamber 101a opposes the opening 101c2 after the revolution body 101a has taken a turn of 180°. When the opening 101c2 closed by the end surface of the revolution body 101b comes to the position opposing the opening of the compression chamber 101a to establish a communication, the high-pressure steam from the waste heat boiler 103a is instantaneously released. Thus, the steam jetted from the opening 101c2 turns into a shock wave and propagates in the compression chamber 101a.

The process for producing hydrogen of the present embodiment will now be described with reference to FIG.7 and FIG.8.

(1) First, waste plastic powder is fed into the compression chamber 101a communicating with the opening 101c1 through the high-speed switching valve 102c by the feeder 102b of the reactive particle feeder 102. The waste plastic powder is prepared by pulverizing waste plastics with the pulverizer 102a and fed into the feeder 102b. The waste plastics are transferred to the pulverizer 102a by an inert gas, such as $N_2$. In addition to waste plastic powder, the reactive particles may comprise coke breeze or powdered coal, and such coke breeze or powdered coal may be fed into the feeder 2b, instead of waste plastic powder.

(2) The revolution body 101b turns and establishes a communication between the opening 101c2 and the compression chamber 101a to which the waste plastic powder has been fed. At this moment, the opening 101c2 closed by the opposing end surface of the revolution body 101b is instantaneously opened to establish a communication with the compression chamber 101a, and thereby high-pressure steam from the waste heat boiler 103a is instantaneously released to turn into a shock wave. The shock wave is thus fed into the compression chamber 101a and propagated. In the present embodiment, the steam in the waste heat boiler 103a, for example, has a temperature of 400°C and a pressure of 4 MPa.

(3) On propagating the shock wave of the high-pressure steam into the compression chamber 101a containing the waste plastic powder, the waste plastic powder is heated by compression against an end of the compression chamber 101a on the impact of the shock wave, thereby reacting with the steam to produce a hydrogen-containing gas. In this instance, in the present embodiment, the mixture in the compression chamber 101a has a temperature of 1500°C and a pressure of 4 MPa. The waste plastic powder is generally expressed by the chemical formula $C_{2n}H_{4n}$, and the reaction in the compression chamber 101a is principally expressed by $C_{2n}H_{4n} + 2nH_2O \rightarrow 2nCO + 4nH_2$. By continuously revolving the revolution body 1b as above, the reaction is continuously carried out to produce the hydrogen-containing gas continuously.

(4) The hydrogen-containing gas produced in the compression chamber 101a is jetted into the gas tank 105 through the Laval nozzle 104 provided to the reactor 101, and thus temporarily accommodated. In this instance, since the high-pressure hydrogen-containing gas jetted from the Laval nozzle 104 is rapidly cooled while being heat-insulated, counterreaction is prevented. Since the gas tank 105 has a relatively large space, the high-pressure hydrogen-containing gas jetted from the Laval nozzle 104 is temporarily accommodated in the gas tank 105 to reduce its pressure. As described above, the present embodiment prevents counterreaction and enhances the efficiency of the reaction by reducing the pressure and temperature of the high-pressure, high-temperature hydrogen-containing gas.

(5) Then, the hydrogen-containing gas in the gas tank 105 is passed through the bag filter apparatus 106 to remove unreacted reactive particles remaining in the hydrogen-containing gas. The unreacted reactive particles collected by the bag filter apparatus 106 are returned to the feeder 102b for recycling.

(6) The hydrogen-containing gas passed through the bag filter apparatus 106 is separated into hydrogen and carbon monoxide (CO), and thus hydrogen is obtained. The CO separated from the hydrogen-containing gas is used as a fuel in the combustion apparatus or heat process apparatus 108, and thus recycled effectively.

While some of the embodiments of the present invention have been illustrated above, the present invention is not limited to the foregoing embodiments, and various modifications may be made without departing from the scope and spirit of the invention as defined in and by the claims. For example, for generation of the shock wave using high-pressure steam from the waste heat boiler 103a, the high-speed switching valve 103b may be switched, or a film provided between the compression chamber 101a and the waste heat boiler 103a may be broken to release the high-pressure steam.

Preferably, the waste plastic powder or coke breeze used as the reactive particles has a particle size of 100 μm or less from the viewpoint of ensuring the reaction.

In addition to the waste plastic powder and coke breeze, other materials containing hydrocarbon or carbon may be used as the reactive particles.

The conditions of temperature, pressure, and the like are not limited to the above-mentioned values, and any conditions may be applied as long as the reactive particles and steam react in the compression chamber to produce hydrogen.

In the present embodiment, a mixture of steam and reactive particles containing hydrocarbon or carbon is impact-compressed and rapidly heated to cause the reactive particles and the steam to react, by a shock wave generated and propagated by jetting high-pressure gas into a compression chamber containing the steam and the reactive particles, thereby producing hydrogen. Therefore, the heat sufficient for the reaction can be efficiently supplied to the mixture in a short time. The method of the present invention does not require preheating the reactor, and accordingly energy is not lost in the steps of starting and suspending the operation of the apparatus. Temperature is increased in only an area where it is required only when it is require, without maintaining high temperature over a long period continuously from the startup of the operation to the suspension. Accordingly, not only is energy loss reduced, but also time loss is reduced, and thus small-scale production or short-time production become possible. Also, since reactive particles and steam suffice for the raw material, no dedicated fuel is required. Furthermore, the reactive particles and the steam do not produce carbon dioxide in the principal reaction proceeding in the compression chamber. This means that hydrogen is produced while emission of carbon dioxide is prevented.

The apparatus of the present embodiments can efficiently supply to a mixture an amount of heat sufficient for the reaction of the mixture, and accordingly it is not necessary to preheat the reactor. Thus, energy loss in the steps of starting and suspending the operation of the apparatus is reduced, and consequently the running cost of the apparatus is reduced. In addition, temperature is increased in only an area where it is required only when it is require, without maintaining high temperature over a long period continuously from the startup of the operation to the suspension. Accordingly, many fire-resistant materials are not required and thus the cost of the apparatus is reduced. Also, not only is energy loss reduced, but also time loss is reduced, and thus the apparatus allows small-scale production.

Embodiment 7

A hydrogen production apparatus according to Embodiment 7 will now be described with reference to some of the attached drawings.

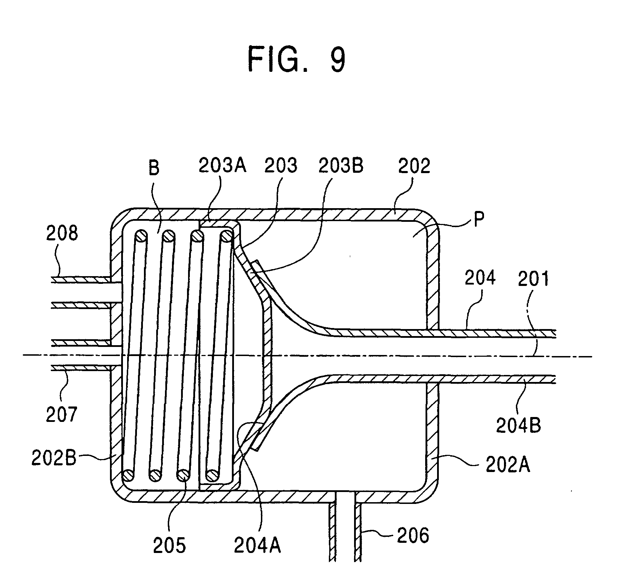

In FIG.9, a cylindrical cylinder 202 having an axis 201 is sealed. A piston 203 is provided in such a manner as to freely slide in the direction of the axis, in the cylinder 202, thus dividing the space in the cylinder 202 into a pressure space P and a backpressure space B.

A converging tube 204 is provided in the pressure space P in the cylinder 201. The converging tube 204 extends to the outside of the cylinder 202 through one 202A of the end walls of the cylinder 202. The converging tube 204 has an inlet opening 204A with a larger diameter, and an external portion 204B whose diameter decreases toward the outlet opening outside the cylinder 202. The diameter gradually decreases from the inlet opening 204A to the external portion 204B. The inlet opening 204A is tapered.

The piston 203, in the present invention, is formed in a light weight by pressing a metal plate, and is accordingly so light as to be suitable for quick movement with respect to the cylinder 202. The piston 203 has a skirt 203A in contact with the internal wall of the cylinder 2, capable of sliding on the wall, and a tapered portion 203B in the position where the pressure space P and the backpressure space B are separated. The tapered portion 203B is tapered so as to come into close contact with the tapered portion of the inlet opening 204A of the converging tube 204. In addition, a coiled spring 205 is provided between the piston 203 and the other end wall 202B of the cylinder 202 and places a backpressure on the piston 203 to press it on the inlet opening 204A of the converging tube 204.

The cylinder 202 is joined to a high-pressure steam feeding tube 206 communicating with the pressure space P, a backpressure stream feeding tube 207 communicating with the backpressure space B, and an exhaust tube 208.

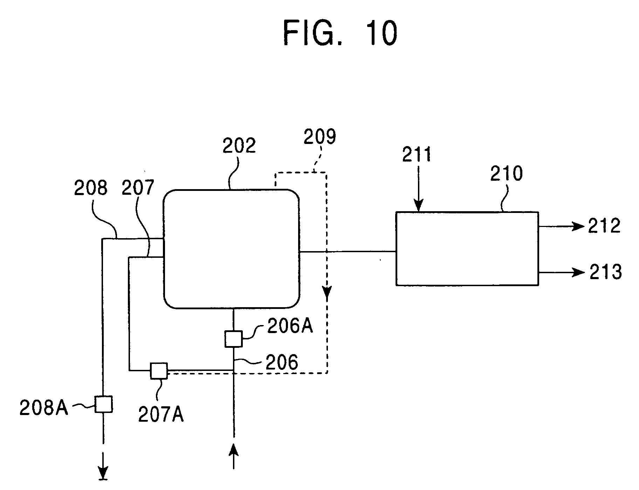

Such a shock wave generator of the present embodiment is used as shown in FIG.10. The high-pressure steam feeding tube 206, backpressure steam feeding tube 207, and exhaust tube 208 joined to the cylinder 202 have valves 206A, 207A, and 208A, respectively. The valve 206A is normally open and valves 207A and 208A are opened at a given time according to a sequence. In the present embodiment, part of the high-pressure steam fed from the high-pressure steam feeding tube 206 is used as backpressure steam, and the backpressure steam feeding tube 207 is therefore diverged from the high-pressure steam feeding tube 206.

The converging tube 204 of the shock wave generator is connected to a reactor 210 at its outlet side.

The form of the reactor 210 is not particularly limited, as long as it has a compression chamber suitable for instantaneously compressing the raw material or reactive particles together with high-pressure steam by a shock wave of the high-pressure steam from a shock wave generator.

Such a compression chamber is joined to a reactive particle feeding tube 211 for feeding reactive particles into the compression chamber, a produced gas outlet tube 212, and an exhaust tube 213, and has a valve (not shown in the figures) opening or closing at a predetermined time.

The operation of the present embodiment will now be described using an example in which steam and waste plastic powder as reactive particles react to produce hydrogen using a shock wave.

In FIG.10, high-pressure steam is fed into the pressure space P of the cylinder 202 from the high-pressure steam feeding tube 206 through the valve 206A in open state. The valve 206A is normally open. The high-pressure steam is also fed to the backpressure feeding tube 207A through the valve 207A in open state.

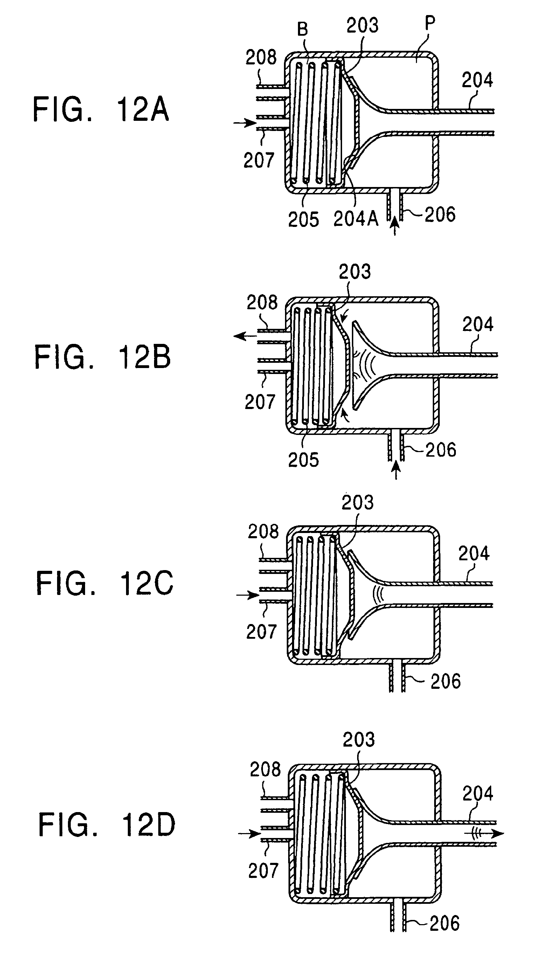

(1) In this state, the pressure space P and backpressure space B of the cylinder 2 are filled with the high-pressure steam, and the piston 203 is pressed against the inlet opening 204A of the converging tube 204 by the urge of the coiled spring 205, thus closing the inlet opening 204A (see FIG. 12(A)).

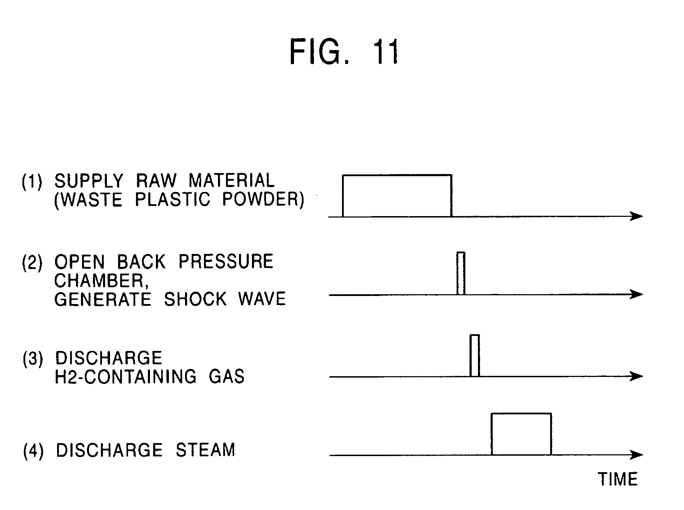

(2) The reactive particles being the raw material are fed into the compression chamber of the reactor 210 from the reactive particle feeding tube 211 to fill the chamber (see FIG. 11 (1) .

(3) Then, the valve 208A is instantaneously opened to reduce the pressure of the backpressure space B (see FIG. 11(2)). Consequently, the pressure of the pressure space P becomes higher than that of the backpressure space B and the urge of the spring, so that the piston 203 backs off against the backpressure to provide a space between it and the inlet opening 204A of the converging tube 204. The high-pressure steam flows into the converging tube 204 from this space (see FIG. 12B). This instantaneous flow of the high-pressure steam causes a shock wave to occur in the converging tube 204. The shock wave is propagated to the outlet opening of the converging tube 204 to instantaneously compress the steam entering the compression chamber 210 together with the waste plastic powder and thus to heat them, thereby causing a reaction to produce hydrogen gas.

(4) The hydrogen gas is taken out from the produced gas outlet tube 212 (see FIG. 11(3)) and high-pressure steam is simultaneously fed as backpressure to the backpressure space B (see FIG. 12C), so that the piston 203 closes the inlet opening 204A of the converging tube 204 (see FIG. 12D). In the reactor 210, exhaust gas including steam in the compression chamber is discharged form the exhaust tube 213 (see FIG. 11(4)).

If the pressure space P is connected to the valve 207A with a duct 209, designated by a dashed line in FIG. 10, when the high-pressure steam is fed into the backpressure space B, the high-pressure steam to remain in the pressure space flows to the backpressure space B due to the open motion of the valve 207A. Thus, the pressure space P is always filled with fresh high-pressure steam to maintain high temperature.

In the present embodiment, the reactive particle feeding tube 211, produced gas outlet tube 212, and exhaust tube 213 may each have a switching valve, and these valves and valves 207A and 208A may be sequentially opened or closed for a period and in order shown in FIG.11 by a cam mechanism. Alternatively, the operation of the valves may be controlled by a control circuit for controlling the valves so as to sequentially open and close for the period and in order above.

As described above, the present embodiment achieves the generation of a shock wave in an extremely simple structure in which no member but the piston moves relatively with respect to other members. Thus, the apparatus for producing hydrogen using a shock wave can be downsized and simplified, and the price of the apparatus can decrease.

## Claims

1. A method for producing hydrogen comprising the steps of:

heating a fluid to turn into a high-pressure gas having a temperature in the range from 200°C or higher to 400°C or lower by heat exchange with a heat source;
feeding a raw material into a reactor;
instantaneously releasing the high-pressure gas into the reactor to generate a shock wave; and
impact-compressing the raw material by the shock wave to heat the raw material, to produce the hydrogen.

2. A method for producing hydrogen comprising the steps of:

heating a fluid to turn into a high-pressure gas having a pressure at least five times as high as the internal pressure of a reactor before reaction by heat exchange with a heat source;
feeding a raw material into the reactor;
instantaneously releasing the high-pressure gas into the reactor to generate a shock wave; and
impact-compressing the raw material by the shock wave to heat the raw material, to produce the hydrogen.

3. A method for producing hydrogen comprising the steps of:

heating a fluid having a low boiling-point to turn into a high-pressure gas by heat exchange with a heat source;
feeding a raw material into a reactor;
instantaneously releasing the high-pressure gas into the reactor to generate a shock wave; and
impact-compressing the raw material by the shock wave to heat the raw material, to produce the hydrogen.

4. A method for producing hydrogen according to any one of Claims 1, 2, and 3, further comprising the step of separating the hydrogen from other products.

5. A method for producing hydrogen according to any one of Claims 1, 2, and 3, wherein the heat source is at least one selected from the group consisting of heat generating sources installed in thermal power plants, waste incineration plants, waste disposal plants, pig-iron making facilities in steel-making works, steel-making facilities of steel-making works, scrap melting facilities, nonferrous metal refining facilities, cement firing facilities, combustion facilities, and heat sources provided for using geothermal heat.

6. A method for producing hydrogen according to any one of Claims 1, 2, and 3, wherein the heat source is a combustion facility that generates steam from the generated heat and that uses the steam for generating electric power.

7. A method for producing hydrogen according to any one of Claims 1, 2, and 3, wherein the heat source is a combustion facility that generates steam from the generated heat generated and that uses the steam for generating electric power, wherein the high-pressure gas is surplus steam.

8. An apparatus for producing hydrogen comprising:

a heat source;
a heat exchanger for heating a fluid to turn into a high-pressure gas having a temperature in the range from 200°C or higher to 400°C or lower by heat exchange with the heat source;
a raw material feeder for feeding a raw material into a reactor; and
the reactor for producing hydrogen by instantaneously releasing the high-pressure gas to generate a shock wave and impact-compressing the raw material by the shock wave to heat the raw material.

9. An apparatus for producing hydrogen comprising:

a heat source;
a heat exchanger for heating a fluid to turn into a high-pressure gas having a pressure at least five times as high as the internal pressure of a reactor before reaction by heat exchange with the heat source;
a raw material feeder for feeding a raw material into the reactor; and
the reactor for producing hydrogen by instantaneously releasing the high-pressure gas to generate a shock wave and impact-compressing the raw material by the shock wave to heat the raw material.

10. An apparatus for producing hydrogen comprising:

a heat source;
a heater for heating a fluid having a low boiling-point to turn into a high-pressure gas;
a feeder for feeding a raw material into a reactor; and,
the reactor for producing hydrogen by instantaneously releasing the high-pressure gas to generate a shock wave and impact-compressing the raw material by the shock wave to heat the raw material.

11. An apparatus for producing hydrogen according to any one of Claims 8, 9, and 10, wherein the heat source is at least one selected from the group consisting of heat generating sources installed in thermal power plants, waste incineration plants, waste disposal plants, pig-iron making facilities in steel-making works, steel-making facilities in steel-making works, scrap melting facilities, nonferrous metal refining facilities, cement firing facilities, combustion facilities, and heat sources for using geothermal heat.

12. An apparatus for producing hydrogen according to any one of Claims 8, 9, and 10, further comprising a separator for separating the hydrogen from other products.

13. An apparatus for producing hydrogen according to any one of Claims 8, 9, and 10, wherein the heat source is a combustion facility that generates steam from the generated heat and that uses the steam for generating electric power.

14. An apparatus for producing hydrogen according to any one of Claims 8, 9, and 10, wherein the heat source is a combustion facility that generates steam from the generated heat and that uses the steam for generating electric power, wherein the high-pressure gas is surplus steam.

15. A hydrogen supply plant comprising:

a heat source;
a steam generator for generating steam having a temperature in the range from 200°C or higher to 400°C or lower by heat exchange with the heat source;
a raw material feeder for feeding a raw material into a reactor;
the reactor for producing hydrogen by instantaneously releasing the steam to generate a shock wave and impact-compressing the raw material by the shock wave to heat the raw material;
a separator for separating the hydrogen from a product containing the hydrogen produced in the reactor; and,
a device for supplying the separated hydrogen.

16. A hydrogen supply plant comprising:

a heat source;
a steam generator for generating steam having a pressure at least five times as high as the internal pressure of a reactor before reaction by heat exchange with the heat source;
a raw material feeder for feeding a raw material into the reactor;
the reactor for producing hydrogen by instantaneously releasing the steam to generate a shock wave and impact-compressing the raw material by the shock wave to heat the raw material;
a separator for separating the hydrogen from a product containing the hydrogen produced in the reactor;and,
a device for supplying the separated hydrogen.

17. A hydrogen supply plant according to any one of Claim 15 or 16, wherein the heat source is a combustion facility that generates steam from the generated heat and that uses the steam for electric power generation, and wherein at least a part of the steam is used for producing the hydrogen when the hydrogen supply is required.

18. A method for generating electric power, comprising the steps of:

heating a fluid to turn into a high-pressure gas having a temperature in the range from 200°C or higher to 400°C or lower by heat exchange with a heat source;

feeding a raw material into a reactor;
instantaneously releasing the high-pressure gas into the reactor to generate a shock wave;
impact-compressing the raw material by the shock wave to heat the raw material, to produce gas that contains hydrogen; and
burning the gas that contains the hydrogen in a gas-turbine to generate electric power.

19. A method for generating electric power, comprising the steps of:

heating a fluid to turn into a high-pressure gas having a pressure at least five times as high as the internal pressure of a reactor before reaction by heat exchange with a heat source;
feeding a raw material into the reactor;
instantaneously releasing the high-pressure gas into the reactor to generate a shock wave;
impact-compressing the raw material by the shock wave to heat the raw material, to produce gas that contains hydrogen; and
burning the gas that contains the hydrogen in a gas-turbine to generate electric power.

20. A method for generating electric power according to any one of Claim 18 or 19, further comprising the steps of:

storing the gas that contains the hydrogen; and
controlling the amount of the generated electric power in accordance with demand for the electric power.

21. A method for producing hydrogen comprising the steps of:

feeding reactive particles containing a hydrocarbon or carbon into a compression chamber of a reactor;
feeding steam into the compression chamber of the reactor;
reacting the reactive particles.with the steam each other, by heating a mixture of the reactive particles and the steam fed into the compression chamber to a high temperature, to produce gas that contains hydrogen, wherein the reaction step comprises the step of reacting the reactive particles with the steam each other by impact-compressing the mixture in the compression chamber by a shock wave generated by jetting a high-pressure gas, and by heating the mixture in the compression chamber to a degree of a high temperature; and
separating the hydrogen from the gas that contains the hydrogen.

22. The method according to according to Claim 21, further comprising the step of feeding the steam as a high-pressure gas into the compression chamber.

23. The method according to any one of Claim 21 or 22, wherein the reactive particles comprise one selected from the group consisting of wasted plastic powder, sprayed particles of melted plastic, powdery coal, and coke breeze.

24. An apparatus for producing hydrogen, in which a mixture of reactive particles that contain a hydrocarbon or carbon and that contain steam is heated to a degree of a high temperature to react, thereby producing gas that contains hydrogen, and in which the hydrogen is separated from the gas that contains the hydrogen, the apparatus comprising:

   a compression chamber for accommodating the mixture of the reactive particles and the steam and compressing the mixture; reactive particle feeding means for feeding the reactive particles into the compression chamber; steam feeding means for feeding the steam into the compression chamber; and shock-wave generating means for generating a shock wave for impact-compressing the mixture of the reactive particles fed into the compression chamber and the steam, wherein the shock-wave generating means includes:

   a gas accommodation chamber for accommodating a high-pressure gas and communicating the high-pressure gas to the compression chamber; and switching means for establishing and blocking a communication between the gas accommodation chamber and the compression chamber;

   wherein the high-pressure gas in the gas accommodation chamber is instantaneously jetted by the switching means to generate the shock wave, and the shock wave is propagated into the compression chamber and the mixture in the compression chamber is impact-compressed, to heat the mixture to a degree of a high temperature, thereby forcing the reactive particles and the steam to react for producing the gas that contains the hydrogen.

25. An apparatus for producing hydrogen according to Claim 24, further comprising:

   compression chambers extending along the axis-direction of a rotatable revolution-body, located in a plurality of positions in the peripheral direction of the revolution body, the respective compression chambers having an opening at at least one end in the axis direction of the revolution-body; and switching means having a gas jetting port at a position in the radius direction of the compression chambers, the gas jetting port being allowed to communicate with the gas accommodation chamber by rotating the revolution body in which the gas jetting port is opposed to the openings of the compression chambers and an end-surface of the revolution body alternately, wherein the gas jetting port is closed by being opposed to the end-surface of the revolution body and

   wherein the gas jetting port is opened to establish a communication with the compression chamber by being opposed to one of the openings of the compression chambers; wherein the shock wave of the high-pressure gas is intermittently propagated into the plurality of compression chambers by repeating a sequence of blocking and of establishing the communication.

26. An apparatus for producing hydrogen according to any one of Claim 24 or 25, further comprising steam feeding means through which the shock wave generating means accommodates the steam generated by a waste heat boiler as the high-pressure gas in the gas accommodation chamber.

27. An apparatus for producing hydrogen according to any one of Claims 24, 25, or 26, further comprising a Laval nozzle, a gas tank, a filter apparatus, and a hydrogen separator.

# FIG. 1

# FIG. 2

HIGH-PRESSURE
STEAM

# FIG. 3

(1) SUPPLY RAW MATERIAL

(2) OPEN SWITCHING VALVE
GENERATE SHOCK WAVE

(3) DISCHARGE HYDROGEN-
CONTAINING GAS

(4) DISCHARGE STEAM

TIME

# FIG. 4

## FIG. 5

# FIG. 6

EP 1 498 387 A1

FIG. 7

# FIG. 8A

# FIG. 8B

# FIG. 9

FIG. 10

# FIG. 11

(1) SUPPLY RAW MATERIAL
(WASTE PLASTIC POWDER)

(2) OPEN BACK PRESSURE
CHAMBER,
GENERATE SHOCK WAVE

(3) DISCHARGE
H2-CONTAINING GAS

(4) DISCHARGE STEAM

TIME

FIG. 12A

FIG. 12B

FIG. 12C

FIG. 12D

## INTERNATIONAL SEARCH REPORT

International application No.

PCT/JP03/03940

| A. CLASSIFICATION OF SUBJECT MATTER |
|---|
| Int.Cl$^7$  C01B3/02, B01J3/08, C08J11/10, C10J3/00 |
| According to International Patent Classification (IPC) or to both national classification and IPC |

| B. FIELDS SEARCHED |
|---|
| Minimum documentation searched (classification system followed by classification symbols) |
| Int.Cl$^7$  C01B3/02, B01J3/08, C08J11/10, C10J3/00 |

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2003 |
| Kokai Jitsuyo Shinan Koho | 1971–2003 | Toroku Jitsuyo Shinan Koho | 1994–2003 |

Electronic data base consulted during the international search (name of data base and, where practicable, search terms used)
WPI (DIALOG)

### C. DOCUMENTS CONSIDERED TO BE RELEVANT

| Category* | Citation of document, with indication, where appropriate, of the relevant passages | Relevant to claim No. |
|---|---|---|
| Y | JP 62-236892 A  (Distrigaz S.A.),<br>16 October, 1987 (16.10.87),<br>Full text<br>& EP 240483 A1  & US 4813179 A | 2-5,9-12,<br>16,21-23 |
| Y | JP 50-122503 A  (INSTITUT DE RECHERCHES DE LA<br>SIDERURGIE FRANCAISE (IRSID))<br>26 September, 1975 (26.09.75),<br>Full text<br>& FR 2270201 A1  & DE 2510080 A1<br>& GB 1467123 A | 2-5,9-12,<br>16,21-23 |
| A | JP 41-005724 B1  (Sun Oil Co.),<br>29 March, 1966 (29.03.66),<br>Full text<br>(Family: none) | 1-17,21-27 |

☒ Further documents are listed in the continuation of Box C.  ☐ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier document but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 04 July, 2003 (04.07.03) | 08 July, 2003 (08.07.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

## INTERNATIONAL SEARCH REPORT

International application No.

PCT/JP03/03940

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 5-280373 A  (Toshiba Corp.),<br>26 October, 1993 (26.10.93),<br>Full text<br>(Family: none) | 19,20 |

Form PCT/ISA/210 (continuation of second sheet) (July 1998)

**EP 1 498 387 A1**

## INTERNATIONAL SEARCH REPORT

| International application No. |
|---|
| PCT/JP03/03940 |

**Box I    Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:

   Claims 1 to 7 and 21 to 23 relate to a hydrogen production method, claims 8 to 14 and 24 to 27 relate to a hydrogen production apparatus, and claims 15 to 17 relate to hydrogen supply facilities.  whereas, claims 18 to 20 are characterized in a method for generating electric power, and accordingly, do not so linked with above groups of inventions as to form a single general inventive concept.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1 to 17 and 21 to 27

**Remark on Protest**    ☐    The additional search fees were accompanied by the applicant's protest.

   ☐    No protest accompanied the payment of additional search fees.

Form PCT/ISA/210 (continuation of first sheet (1)) (July 1998)